# EUROPEAN PATENT APPLICATION

(11) **EP 2 730 943 A2**
(43) Date of publication of application: **14.05.2014**
(21) Application number: 13192525.7
(22) Date of filing: 12.11.2013
(51) Int. Cl.: G01S 7/481, F41G 3/14, G01S 13/86

(54) **Pointing system for a laser**

(30) Priority: 12.11.2012 US 201213674269
(71) Applicant: GE Aviation Systems LLC, Grand Rapids, MI 49512-1991 (US)
(72) Inventor: Buehler, Eric Daniel, Grand Rapids, MI Michigan 49512-1934 (US); Gross Jr., William Earl, Grand Rapids, MI Michigan 49512-1934 (US); Lassini, Stefano Angelo Mario, Grand Rapids, MI Michigan 49512 (US)
(74) Representative: Williams, Andrew Richard

(57) **Abstract**

A pointing system having a rotatable housing (20), a boresight (28) relative to the housing (20), a rotatable mirror (38), and a laser (36) emitting a beam of light, wherein the beam of light is redirected off the mirror (38) to the pointing target. When the rotatable mirror (38) is rotated, the beam of light is moved relative to the boresight (28). The system operates such that rotation of the beam of light by means of the rotatable mirror (38) is greater than the rotation of the boresight (28) by means of the rotatable housing (20).

## Description

### BACKGROUND

Pointing systems for light beams, such as a laser, provide for controlling the direction of the light beam to control what the light beam illuminates. Such pointing systems have a variety of applications and are well-suited for range-finding applications or targeting systems for indicating or highlighting an object. The light beam may be mounted in a housing that is rotationally supported to aid in the pointing of the light beam. Both the pointing system and the object being highlighted may be stationary or moving. In an aircraft, the pointing system is typically housed within a gimbal apparatus having a laser, wherein the movement, tracking, or variable pointing is accomplished by the rotation of the gimbal about one or more of its axes.

### BRIEF DESCRIPTION

A pointing system having a rotatable housing, a boresight relative to the housing, a rotatable mirror, and a laser emitting a beam of light wherein the beam of light is redirected off the mirror to the pointing target. When the rotatable mirror is rotated, the beam of light is moved relative to the boresight. The system operates such that rotation of the beam of light by means of the rotatable mirror is greater than the rotation of the boresight by means of the rotatable housing.

### BRIEF DESCRIPTION OF THE DRAWINGS

In the drawings:
FIG. 1 is a perspective view of a platform, in the form of an aircraft, with a laser pointing system that is pointing the laser at a target, illustrated as a car.
FIG. 2 is a perspective view of the laser pointing system of FIG. 1 and illustrating the corresponding movement and boresight characteristics.
FIG. 3 is a schematic view of the laser pointing system, including a mirror and motor for redirecting a laser sight.

### DETAILED DESCRIPTION

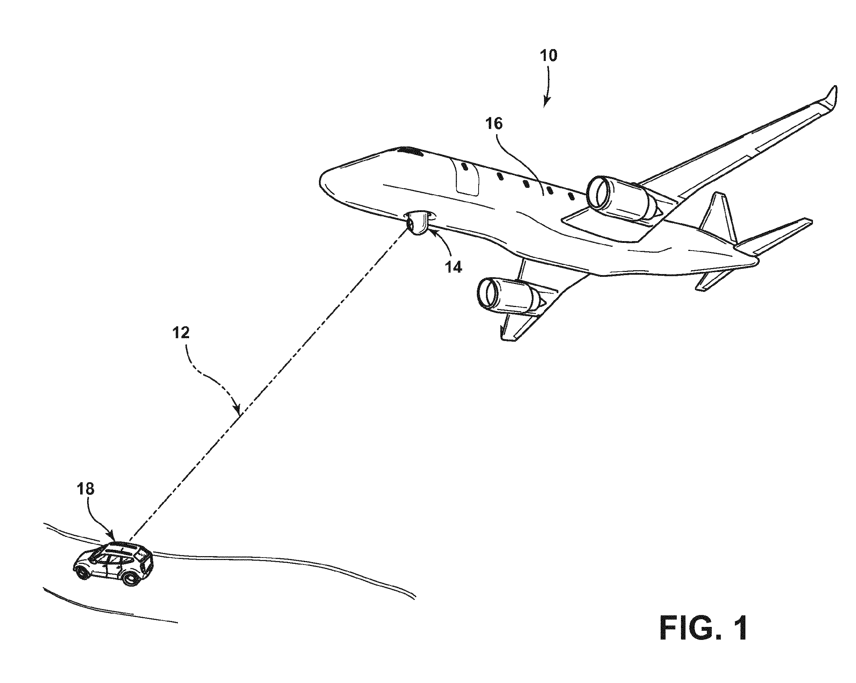

The embodiments of the present invention are related to an apparatus for pointing a laser beam mounted within a housing, which may be used for illuminating a target. In the embodiment of FIG. 1 an in-flight aircraft 10 carries such a pointing system, which, as illustrated, is shown emitting a laser beam 12 from a moveable mount, such as a gimbal mount 14, for example. The laser beam 12 is illustrated illuminating a target, i.e. designating, shown as a car 18 driving on a road.

While the embodiment of FIG. 1 is an air-to-ground embodiment, other embodiments of the invention are possible, including use on other types of vehicles, aircraft or not, or on ground or aqueous-based vehicles are envisioned. Additionally, the system may be used in air-to-air, air-to-water, ground-to-air, ground-to-ground, ground-to-water, water-to-air, water-to-water, and water-to-ground targeting or pointing systems.

Furthermore, while the embodiment of FIG. 1 is illustrated as part of a gimbal mount 14, other types of mounts may also be used. The mounts may have one, two, or three degrees of rotational freedom. The mounts may also have one, two, or three degrees of translational freedom.

The pointing system is contemplated to be used with any apparatus configured for direction-based targeting or tracking activities. Additional examples of direction-based targeting or tracking activities include communication, imaging, range-finding, and other sensor-measured or payload functions. Although a laser beam 12 is described, additional electromagnetic signals and indicators such as infrared light, radar, and other optics are imagined.

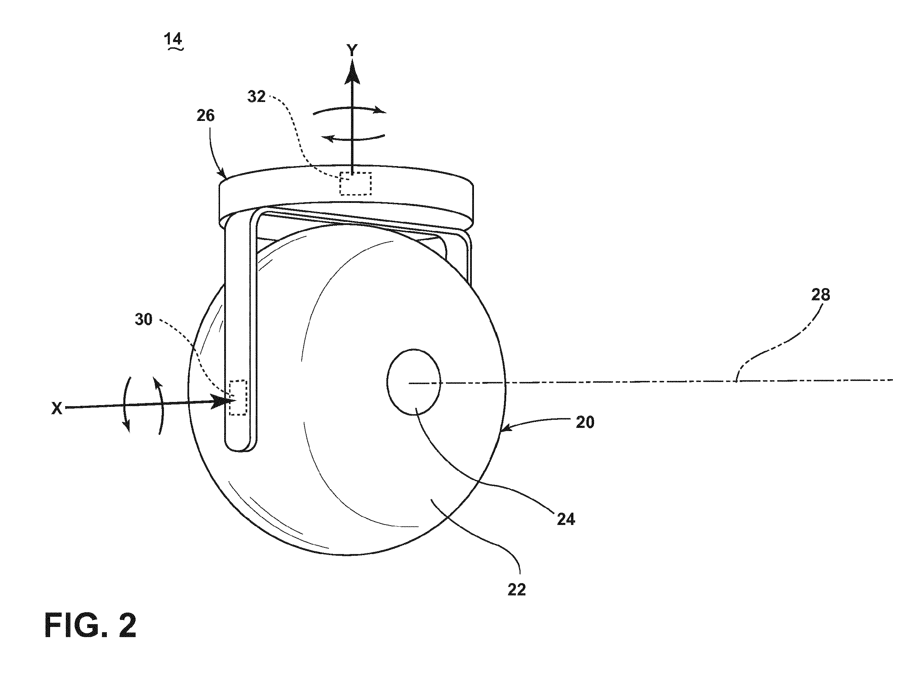

Referring to FIG. 2, the gimbal mount 14 comprises a laser housing 20, an aperture 24, and a gimbal mounting structure 26 for attaching the gimbal mount 14 to the aircraft fuselage 16. The laser housing 20 comprises a sidewall 22, which includes an aperture 24, which may be open or closed, such as by a transparent or translucent window, which allows for the transmission of the laser beam 12 without distortion. The laser beam 12, projected normally from the surface of the laser housing 20 through the aperture 24 defines a boresight 28 for the gimbal mount 14.

The laser housing 20 is rotatably supported by the gimbal mount 14 for rotation about an X, and Y axis, as illustrated. Each axis (X, and Y, respectively) is rotated by a coupled servo motor 30, 32(not shown) located within the laser housing 20 and attached to the mounting structure 26. Although the embodiment is described as rotatably supported around two axes, it should be understood that as few as one rotational axis is intended in accordance with the current invention. Likewise, as few as one driver may be coupled to operate a single rotational axis. Moreover, the invention shall not be limited by the embodiment of the servo motors 30, 32 as it is agreed other driver apparatuses serve the similar function of rotating the laser housing 20.

The servo motors 30, 32 operate to rotate the laser housing 20 at a known maximum rate α, (measured in angle per second). For the reason that the boresight 28 is constant with respect to the laser housing 20 and the aperture 24, the known maximum rate or rotation α is the same for both the laser housing 20 and the boresight 28.

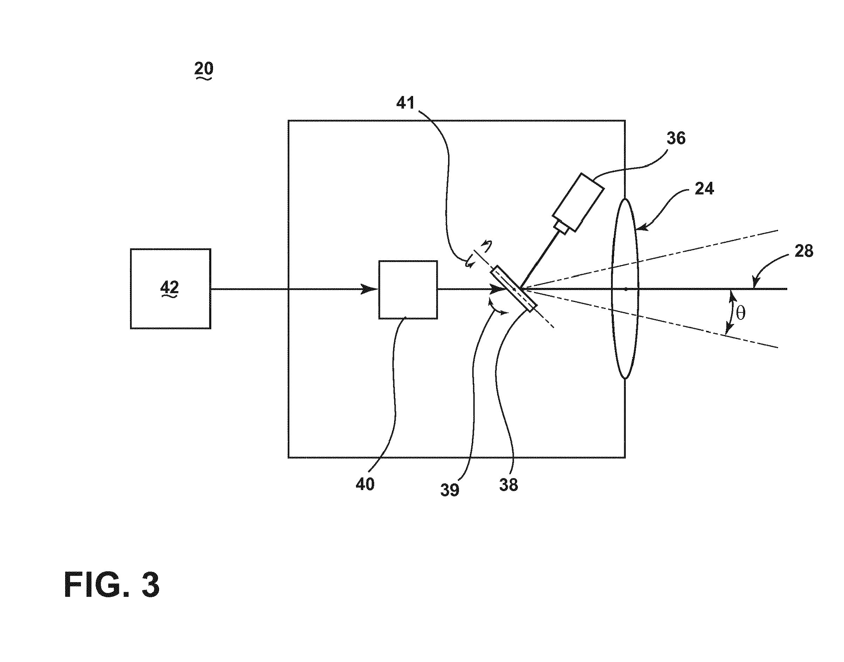

Turning now to FIG. 3, the laser housing 20 comprises a laser source 36, an actuating mirror 38, and a controller 40. Any typical laser source 36 suitable for pointing is contemplated. The laser source may output a continuous or pulsed laser beam, either of which may be modulated. The pulsing and modulating may be used to identify the laser beam. One example of a suitable laser is a class 3B, edge emitting laser, operating at 1550 nm wavelength, producing a circular beam diameter of 0.6 mm, at a maximum power of 110 mW. Further sources of additional signals and indicators, such as sources for the previously mentioned infrared light, radar, or other optics, are envisioned.

The actuating mirror 38 may be any sort of moveable mirror, such as a digital micromirror device (DMD), which comprises a semiconductor chip with a hinge attached, having a mirror mounted to and supported by the hinge rotatable about a hinge axis, and an actuating driver for controlling the movement of the mirror about the hinge axis. In the preferred embodiment, the DMD actuator can rotate the DMD mirror surface about the same two axes of rotation as the gimbal mount 14, illustrated as a first axis of rotation 39 and a second axis of rotation 41. Alternatively, the mirror may be actuated upon as few as one axis of rotation, and as many as three axes of rotation.

Furthermore, other actuating mirrors are envisioned comprising at least one set of a motor and an actuating arm mounted to the laser housing 20. Although illustrated as a mirror, it is understood that the current embodiment of the invention includes any reflective or deflective surface suitable for redirecting a signal or indicator as described. This redirecting surface may comprise a coating or naturally reflective properties that function in a similar manner as described herein.

The laser source 36 and actuating mirror 38 are configured within the laser housing 20 in such a way that the laser source 36 emits a laser beam 12, which is reflected off the actuating mirror 38, directing the beam 12 through the aperture 24, away from the laser housing 20.

The controller 40 is also mounted within the laser housing 20 and configured to receive a targeting input 42 from a joystick. The controller 40 produces an output voltage in response to the targeting input 42 that is received by the actuating mirror 38. The output voltage typically ranges from 0 to 5V. Alternate input signals include manual operator signals, pilot head-tracking signals, or automated tracking signals in response to a system or algorithm. Alternatively, the actuating mirror 38 may be configured to receive a digital output signal from controller 40 in response to a targeting input 42.

The controller 40 and the actuating mirror 38 are configured in such a way that if no input 42 or a neutral targeting input signal 42 is received by the controller 40, the actuating mirror 38 reflects the laser beam 12 normally through the aperture 24, in perfect alignment with the boresight 28. Otherwise, the actuating mirror 38 operates in response to the output analogue voltage signal and actuates the actuating mirror 38, altering the surface angle of the actuating mirror 38, and thus, the angle of the reflected laser beam 12.

The maximum available rotational range of the reflected laser beam 12 is illustrated in FIG. 3 as θ. In the preferred embodiment, the maximum rotational range θ is known to be up to ± 5° in any dimension, with respect to boresight 28. The laser beam 12 and aperture 24 are configured in such a way that the radius of the maximum rotational range θ with respect to boresight 28 is less than the radius of the aperture 24. DMD mirrors are known to rotate up to ± 12° in any dimension and thus alternate maximum rotational range θ is envisioned, limited only by the actuating mirror assembly and size of the aperture 24.

Furthermore, the actuation of the laser beam 12 operates at a known maximum rate β, measured in angle per second. In independent operation of either the actuating mirror 38 or the laser housing 20, the maximum rate of rotation β of the laser beam 12 is greater than the maximum rate of rotation α of the boresight 28. Likewise, in simultaneous operation, the maximum rate of rotation β of the laser beam 12 is greater than the maximum rate of rotation α of the laser housing 20 having a boresight 28.

In operation, when using the pointing system to illuminate a target, the controller 40 receives a targeting input 42 indicative of where the boresight 28 should be aimed to illuminate the target. In an aircraft 10 implementation, the targeting input 42 may come from an aiming device mounted on the pilot's helmet. In some cases, the targeting input 42 may direct the pointing system at a rate below α, which means the gimbal mount 14 alone can move quickly enough to keep the laser beam in-step with the targeting input 42. However, if the rate of movement of the targeting input 42 is greater than α, the controller 40 may effect movement of the actuating mirror 38 to increase the acquisition speed of the pointing system relative to the targeting input 42.

Furthermore, in some cases, the target may move relative to the pointing system at a rate below α, which means the gimbal mount 14 alone can move quickly enough to keep the laser beam 12 locked on the target. However, if the rate of movement of the target is greater than α, then the controller 40 may effect movement of the actuating mirror 38 to keep the laser beam 12 locked on the target.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A pointing system comprising:
   a housing having an opening defining a boresight;
   a moveable mount rotationally supporting the housing for rotation about at least one rotational axis;
   a first driver operably coupled to the moveable mount to rotate the housing about the at least one rotational axis;
   a laser provided within the housing and configured to emit a beam of light;
   a mirror movably mounted within the housing to direct the beam of light through the opening; and
   a second driver operably coupled to the mirror to effect the movement of the mirror;
      wherein movement of the mirror moves the beam of light relative to the boresight.
2. The pointing system of clause 1, wherein the first driver operates at a first rate and the second driver operates at a second rate, which is faster than the first rate.
3. The pointing system of any preceding clause, wherein the first rate is a maximum rate for the first driver.
4. The pointing system of any preceding clause, wherein the mirror is movably mounted to rotate about the at least one axis of rotation.
5. The pointing system of any preceding clause, wherein the first driver operates at a first rate and the second drive operates at a second rate, such that the laser is rotated at a faster rotational rate at the second rate than at the first rate.
6. The pointing system of any preceding clause, wherein the moveable mount rotationally supports the housing for rotation about two axes of rotation.
7. The pointing system of any preceding clause, wherein the moveable mount rotationally supports the housing for rotation about three axes of rotation.
8. The pointing system of any preceding clause, wherein the moveable mount comprises a gimbal mount supporting the housing.
9. The pointing system of any preceding clause, wherein the mirror comprises a mirror mounted to a hinge.
10. The pointing system of any preceding clause, wherein the second driver comprises a semiconductor chip supporting the hinge.
11. The pointing system of any preceding clause, wherein the mirror comprises a mirror mounted to a hinge.
12. The pointing system of any preceding clause, wherein the second driver comprises a semiconductor chip supporting the hinge.
13. The pointing system of any preceding clause, wherein the beam of light is at least one of pulsed and modulated.
14. A pointing system comprising:
   a housing having an opening defining a boresight;
   a rotatable mount rotationally supporting the housing for rotation about at least two rotational axes;
   a laser provided within the housing and configured to emit a beam of light;
   a rotatable mirror located within the housing to direct the beam of light through the opening and rotatable about at least one of the at least two rotational axes, wherein movement of the mirror moves the beam of light relative to the boresight.
15. The pointing system of any preceding clause, wherein the rotatable mount supporting the housing operates at a first rate and the rotatable mirror operates at a second rate, which is faster than the first rate.
16. The pointing system of any preceding clause, wherein the first rate is a maximum rate for the first driver.
17. The pointing system of any preceding clause, wherein the rotatable mount supporting the housing operates at a first rate and the rotatable mirror operates at a second rate, such that the laser is rotated at a faster rotational rate at the second rate than at the first rate.
18. The pointing system of any preceding clause, wherein the rotatable mount rotationally supports the housing for rotation about three axes of rotation.
19. The pointing system of any preceding clause, wherein the housing mount comprises a gimbal mount supporting the housing.
20. The pointing system of any preceding clause, wherein the beam of light is at least one of pulsed and modulated.

## Claims

1. A pointing system comprising:
a housing (20) having an opening (24) defining a boresight (28);
a moveable mount (14) rotationally supporting the housing for rotation about at least one rotational axis;
a first driver (30,32) operably coupled to the moveable mount to rotate the housing about the at least one rotational axis;
a laser (36) provided within the housing and configured to emit a beam of light;
a mirror (38) movably mounted within the housing to direct the beam of light through the opening; and
a second driver operably coupled to the mirror to effect the movement of the mirror;
wherein movement of the mirror moves the beam of light relative to the boresight.

2. The pointing system of claim 1, wherein the first driver (30,32) operates at a first rate and the second driver operates at a second rate, which is faster than the first rate.

3. The pointing system of claim 2, wherein the first rate is a maximum rate for the first driver (30,32).

4. The pointing system of any preceding claim, wherein the mirror (38) is movably mounted to rotate about the at least one axis of rotation.

5. The pointing system of claim 4, wherein the first driver (30,32) operates at a first rate and the second drive operates at a second rate, such that the laser (36) is rotated at a faster rotational rate at the second rate than at the first rate.

6. The pointing system of any preceding claim, wherein the moveable mount (14) rotationally supports the housing (20) for rotation about two axes of rotation.

7. The pointing system of claim 6, wherein the moveable mount (14) rotationally supports the housing (20) for rotation about three axes of rotation.

8. The pointing system of claim 7, wherein the moveable mount (14) comprises a gimbal mount supporting the housing (20).

9. The pointing system of any preceding claim, wherein the mirror (38) comprises a mirror mounted to a hinge.

10. The pointing system of claim 9, wherein the second driver comprises a semiconductor chip supporting the hinge.

11. The pointing system of any preceding claim, wherein the beam of light is at least one of pulsed and modulated.

12. A pointing system comprising:
a housing (20) having an opening (24) defining a boresight (28);
a rotatable mount (14) rotationally supporting the housing for rotation about at least two rotational axes;
a laser (36) provided within the housing and configured to emit a beam of light;
a rotatable mirror (38) located within the housing to direct the beam of light through the opening and rotatable about at least one of the at least two rotational axes, wherein movement of the mirror moves the beam of light relative to the boresight.

13. The pointing system of claim 12, wherein the rotatable mount (14) supporting the housing operates at a first rate and the rotatable mirror (38) operates at a second rate, which is faster than the first rate.

14. The pointing system of either of claim 12 or 13, wherein the rotatable mount (14) supporting the housing (20) operates at a first rate and the rotatable mirror (38) operates at a second rate, such that the laser (36) is rotated at a faster rotational rate at the second rate than at the first rate.

15. The pointing system of any of claims 12 to 14, wherein the rotatable mount rotationally supports the housing for rotation about three axes of rotation.
